# EUROPEAN PATENT SPECIFICATION

(11) **EP 4 418 371 B1**
(45) Date of publication and mention of the grant of the patent: **01.10.2025**
(21) Application number: 23157073.0
(22) Date of filing: 16.02.2023
(51) Int. Cl.: H01M 4/86, H01M 4/88, H01M 8/1004, H01M 8/1006, H01M 8/1097, H01M 8/14, H01M 8/12

(54) **MATERIAL LAYER FOR A FUEL CELL**
MATERIALSCHICHT FÜR EINE BRENNSTOFFZELLE
COUCHE DE MATÉRIAU POUR PILE À COMBUSTIBLE

(43) Date of publication of application: 21.08.2024
(73) Proprietor: Tampere University Foundation sr, 33014 Tampereen Yliopisto (FI)
(72) Inventor: ASGHAR, Imran, 00076 Aalto (FI); LUND, Peter, 00076 Aalto (FI)
(74) Representative: Laine IP Oy

(56) References cited:
- WO-A1-2012/018297
- CN-A- 111 554 956
- CN-B- 104 103 842
- LI PING ET AL: "A single layer solid oxide fuel cell composed of La2NiO4and doped ceria-carbonate with H2and methanol as fuels", INTERNATIONAL JOURNAL OF HYDROGEN ENERGY, ELSEVIER, AMSTERDAM, NL, vol. 41, no. 21, 16 April 2016 (2016-04-16), pages 9059 - 9065, XP029554687, ISSN: 0360-3199, DOI: 10.1016/J.IJHYDENE.2016.03.167
- ZAGÓRSKI KRZYSZTOF ET AL: "Performance of a single layer fuel cell based on a mixed proton-electron conducting composite", JOURNAL OF POWER SOURCES, ELSEVIER, AMSTERDAM, NL, vol. 353, 14 April 2017 (2017-04-14), pages 230 - 236, XP029983156, ISSN: 0378-7753, DOI: 10.1016/J.JPOWSOUR.2017.04.007

## Description

A uniquely designed material layer for a single-layer solid oxide fuel cell and a method for manufacturing the same

### Background of the Invention

The invention relates to fuel cells, specifically to single layer fuel cells. In such cells, a single material layer performs all the functions of a more conventional three-layer fuel cell. A single- layer fuel cell thus performs the main fuel cell functions, i.e. hydrogen oxidation reaction, oxygen reduction reaction and ionic transport with minimum electronic leakage.

A conventional three-layer fuel cell consists of anode, electrolyte and cathode layers. The electrodes (anode and cathodes) are porous and consist of materials with mixed ionic and electronic conductivity for efficient electrode reactions, i.e. hydrogen oxidation reaction (HOR) at the anode and oxygen reduction reaction (ORR) at the cathode side of the cell. The electrolyte layer sandwiched between the anode and the cathode is dense and allows only ionic transport (i.e. blocks electric current) through it.

In contrast, a single- layer ceramic fuel cell is constructed of one homogeneous functioning layer, which is formed by mixing semiconductors (usually of both n and p-types) with an ionic conductor.

Due to the presence of different bandgap materials in single-layer fuel cells, bulk junctions exist in the fuel cell in which the anodic reactions occur on p-type material (e.g. NiO) and the cathodic reactions on n-type material (e.g. ZnO). As a result, hydrogen ions and oxygen ions are generated at the surface of the fuel side and the air side according to the cell reactions, i.e. H2 → 2 H⁺ + 2e⁻ at the fuel side and O + 2e⁻ → O²⁻ at the air side, respectively. To balance the charge neutrality, electrons are activated and accumulated on the air side. Short circuiting may be prevented due to the depletion of the charge carriers in the heterojunction formed by the semiconducting oxide components in the mixture, which forces the electrons to move through an external circuit.

Heterojunction refers to the interaction region formed by the contact of two different semiconductors having different dominant charge carriers. In the case of a bulk p-n heterojunction, each spatial p-n heterojunction goes (in a micro and particle scale) through the following process:
Once p and n semiconductors are in contact, electrons diffuse from the n-type to the p-type conduction band and holes from the p-type to the n-type valence band due to the concentration difference. These processes continue until Fermi levels of the n- and p-type semiconductors are aligned. This leads to a bending of the energy band from the p-type to the n-type, and a built-in electric field barrier (BIEF) is formed to prevent the further electron motion from n-type to p-type layer and hole from p to n layer. The formed interaction region is defined as the space charge region, which blocks internal electronic transport and thus alleviates a potential electronic short-circuit threat, while assisting interfacial superionic transport. Subsequently, the fuel cell performance is enhanced.

To achieve high performance values, such as 1000 mWcm⁻² at 550°C, for a semiconductor-ionic material composition give rise to fundamental questions about the mechanisms in the cell. The present stand of understanding is that p-n, Schottky, or bulk heterojunctions created by the oxides in the material mixture attribute to protecting against short circuiting. The porosity issue, or the surface area of the catalytic material, which is crucial to efficient reaction kinetics in the cells has not been addressed in the single-layer fuel cell literature.

With mixed ionic and electronic conduction capability, three-phase boundaries (TPB) are required to promote the cell reactions. TPB is a region of contact between the three phases necessary for the electrochemical reactions at an electrode: an anion conducting phase, an electron conducting phase, and a gas phase. A single-layer ceramic fuel cell should on one hand be porous, so that the number of reaction sites determined by the three-phase boundaries (TPB) are high, in order to support high current generation. A single-layer cell needs on the other hand to be dense in order to prevent gas crossing through the cell, to ensure ionic transport to occur without much resistance. As a result, single-layer fuel cell performance is generally limited due to low concentration of reagents, which is due to a low amount of TPB. Accordingly, there is a need for finding improved ways to produce single-layer fuel cells that would offer a solution to this problem.

Fuel cells, for example single cell fuel cells, are described in WO 2012/018297, XP 029554687, CN 104103842, XP 029983156 and CN 111554956.

### Object of the Invention

The object of the present invention is to develop a composite material layer for a novel single-layer fuel cell and a method to produce such a fuel cell. According to the invention, an increase of the three-phase boundary area of the cell is achieved, which results in an improved fuel cell output power density. A reverse mode of operation is also envisaged, where steam and a voltage applied to the cell will result in hydrogen generation.

The objects of the invention are achieved by what is specified in the appended claims.

### Brief description of the Drawings

The various embodiments of the invention is described in the following in more detail by making reference to the attached drawings, in which
Figure 1 shows a schematic structure of a single-layer fuel cell which may support at least some embodiments of the present invention;
Figure 2A - 2D shows embodiments of a material layer for a solid oxide fuel cell according to the present invention.

### Detailed description of Embodiments

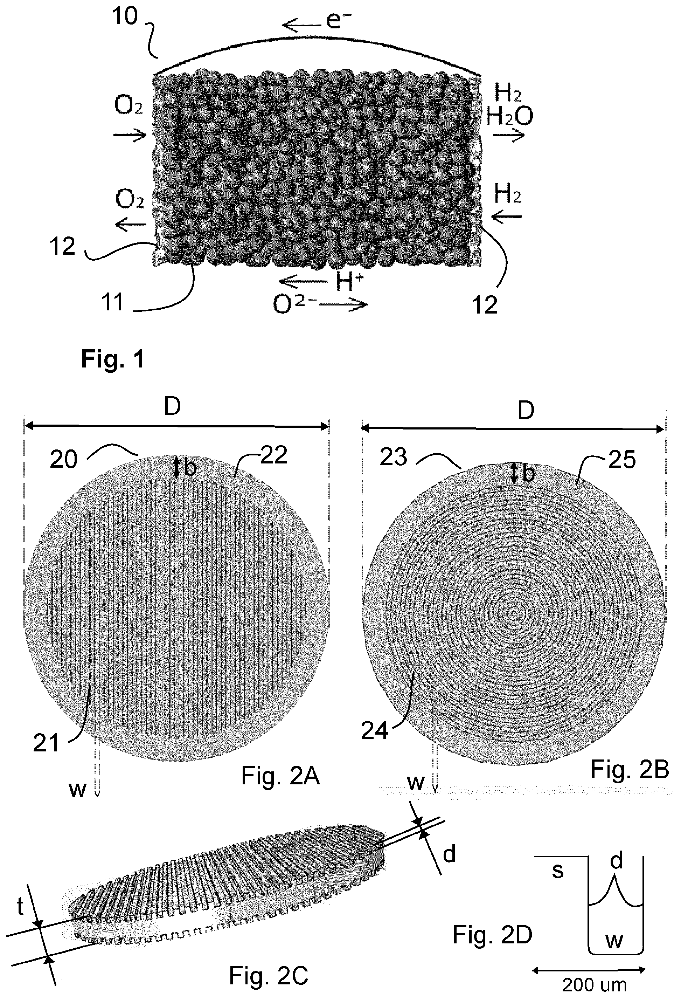

Reference is now made to Fig. 1, which shows a partial cross-section of a disc-formed single-layer fuel cell 10. The material layer 11 consists of various nanoparticles and molecules according to the following legend:

| | | | |
|---|---|---|---|
| 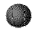 | Ionic conductor | 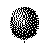 | Water molecule |
| 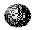 | Catalytic material | 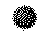 | Oxygen ion |
| | | 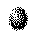 | Hydrogen ion |

The fuel cell further comprises current collectors 12 on both sides of the disc. The current collectors 12 may be a mesh of gold, in the form of a porous non-catalytic layer of Au particles. The current collectors may be applied to the material layer in any suitable way (mesh, deposition etc.) and be of any suitable material as discussed later. The current collectors should be porous or having interstices that allows for gas to be in contact with the material layer 11. In this example, the particle size of the Au particles was 100-300 nm and the layer thickness 5-10 µm.

In the fuel cell operation mode, hydrogen H₂ and oxygen O₂ gases are supplied to the opposite sides of the fuel cell. The oxidation of hydrogen gas (HOR) into hydrogen ions takes place on one side and reduction of the oxygen gas (ORR) into oxide ions happens on the opposite side, which results in multi-ionic O²⁻, H⁺ conduction in the cell, and thus in an electric current e⁻ across the collectors 12.

Conversely, when steam is supplied at one side of the cell and a voltage (e.g. 1.2 V) is applied across a single layer ceramic fuel cell, resulting in a current flow through the fuel cell, the cell operates in a reverse mode and produces hydrogen.

It has been shown that the operating principle of a single component nanocomposite fuel cell can be explained through electron blocking of the resistance and catalytic activity of a wide bandgap oxide. The resistance to the transport of charge carriers and leakage currents would be the dominant performance limiting factors of the 1-layer fuel cell. Furthermore, it has been found that H⁺ dominates the ionic transport in the cell, whereas the contribution from the O²⁻ ions is minor.
[1] (B. Zhu, R. Raza, G. Abbas, M. Singh, An electrolyte-free fuel cell constructed from one homogenous layer with mixed conductivity, Adv. Funct. Mater. 21 (2011) 2465-2469).

According to at least some embodiments of the invention, an inventive single-layer fuel cells layer may be fabricated from wide bandgap lithium-nickel-zinc-oxide (LNZ), and gadolinium-doped- cerium-oxide (GDC) nanoparticles (40-70nm), using Au current collectors. The LNZ compound functions as an electrode material and the GDC particles as an ionic conductor, respectively. A fuel cell material made of a homogenous mixture of LNZ-GDC and non-catalytic Au current collectors reached a 357 mW/cm² power density. Au was used in order to ensure a truly 1-layer fuel cell configuration.

In a single-layer fuel cell, it has been found that a large specific surface area would be required for efficient catalysis [1].

A band gap is a distance that is present between the valence band and the conduction band of electrons. Essentially, the band gap represents the minimum energy that is required to excite an electron up to a state in the conduction band where it can participate in conduction. The band-gap energy of semiconductors tends to decrease with increasing temperature. The relationship between band gap energy E and temperature T can be described by Varshni's empirical expression Eg(T) = Eg(0) - αT²/(T+β), where α and β represent material constants.

The band gaps of Li2O, NiO, ZnO are 16.7 eV, 3.6-4 eV, and 3.3 eV, respectively. The bandgap 3.6 eV of the LNZ nano- powder material (particle size 20-70nm) was determined optically through reflectance measurements. These oxides are wide bandgap materials in which the electron conductivity is quite low at room temperature. Operating at a higher temperature would decrease the band gap according to the Varshni equation, which would slightly improve the electronic conduction. The electronic conduction depends on both the mobility of the electrons and the charge carrier concentration. Generally, at temperatures higher than 200K, the mobility of the electrons (µ) is limited by lattice scattering and decrease as a function of temperature (T): µ ∝T⁻ⁿ, where n < 2 for a single lattice scattering process. On the other hand, at high temperatures, thermally generated intrinsic carriers dominate and improve the electronic conduction. Therefore, the composite of LNZ and GDC can support both the ionic and the electronic conduction to certain extent.

The fluorite structure of CeO₂ doped with Gd primarily supports the oxygen ion conduction through the oxygen vacancies created by the substitution of tetravalent Ce atom with the trivalent Gd atom. Here, 20% Gd doped CeO₂ was used, where the fluorite crystal structure remains stable and efficiently supports oxygen ion conduction through the vacancies. The oxygen ions primarily move through the vacancies in the oxide phase, whereas hydrogen ion conducts through a hopping mechanism on the protonated oxides in the cell.

To describe the material composition more specifically, the ionic conductor particles in Fig. 1 may according to some embodiments of the invention comprise ceramic nanoparticles including 70 - 100 wt % gadolinium doped ceria (GDC) and 30 - 0 wt % of a material chosen from at least one of the following:
- sodium, lithium and potassium carbonates;
- binary carbonates, i.e. sodium and lithium carbonate;
- lithium and potassium carbonate; or
- sodium and potassium carbonate.

The electrode material (LiNiZnO) in Fig. 1 may according to some embodiments of the invention comprise Li₂CO₃, NiCO₃·2Ni(OH)₂·xH₂O and Zn(NO₃)2·6H₂O, which ingredients have been mixed, ground, and sintered in an oven, for example, at 800 °C for 3 h.

The molar composition of the metal elements may be Li:Ni:Zn = 3:9:8. This composition of the electrode material was chosen because single-component fuel cell has been reported to produce 600 mW/cm² at 550 °C [1].

To produce the material layer 11, the GDC and LNZ powders were mixed in a ball milling machine in a ratio of 60:40 wt%, respectively. After mixing, the powder was sintered at 700 °C for 4 h followed by grinding in a mortar for 20 min. The nanoparticle materials are mixed together with a solvent (e.g. terpineol) and other additives (binder, dispersant) to form a paste with appropriate rheological properties.

The resulting nanocomposite powder may be fused into a layer, for example by direct writing, extrusion- based 3D printing, pressing (e.g. iso-static pressing or co-axial pressing) with a pressure of 100-300 MPa for 1-10 minutes in a die, or by sintering at 700 °C for an hour. The nanocomposite powder may be adapted to be fabricated into the single-layer fuel cells by the following methods:
- for fabrication through extrusion-based 3D printing, we developed unique pastes of the nanocomposite materials with appropriate rheological properties and suitable printing parameters;
- for sintering, a specific thermal profile for sintering of the printed cells was developed;
- fabrication through high pressure may be done directly on the nanocomposite materials.

On both sides of the layer, gold (Au) paste or a gold mesh may be applied. Alternatively, silver (Ag) or NCAL ( Ni_{0.8}Co_{0.15}Al_{0.05}LiO₂) coated Ni foam may be used for current collection. However, Ni/ NCAL current collectors exhibit catalytic effects, and such a cell may not correspond to the original 1- layer device and would resemble more a traditional 3-layer fuel cell.

Obviously, various embodiments of the invention may be envisaged where the shape and the size of the material layer and thus the fuel call may alter from the examples presented here, i.e. the layer may have the form of a disc or of be of any other conceivable shape.

Referring now to Fig. 2A, a single-layer fuel cell disc 20 prepared according to at least some embodiments of the present invention is shown. The disc 20 has an outer diameter D, which may be 13 mm, for example. It has an outer brim 22 with a height b, which may be 1 - 2 mm. Inside the brim 22 the surface of the disc 20 is engraved into a comb-like structure, having parallel furrows with a width w 100 µm and a depth d of 200 µm, for example. In fig. 2C is shown the engraved part of the disc 20 in perspective. The disc 20 may have a thickness t of 0.5 - 2 mm, for example.

In Fig. 2B is shown another embodiment of the inventive single-layer fuel cell disc 23, with a brim 25 and a spiral-like engravement 24. Otherwise, the dimensions may be the same as in Fig. 2A and 2C.

It is clear that an engraved surface provides a much larger contact surface with the environment that an even one. As shown in Fig. 2D and with the dimensions discussed above in connection with Fig. 2C, the cross-section of a symmetrically engraved furrow, consisting of the upper surface s (100 µm) of a ridge, the side walls d (2*200 µm) and the bottom w (100 µm) of a groove, provides a total surface distance of 600 µm. For any given cross-sectional length of the surface, there is a computational difference of three (3) times the corresponding surface distance of an even surface, which is 200 µm. Obviously, also here various embodiments of the invention may be envisaged where the shape and the size of the furrowing may alter from the examples presented here, and thus provide even bigger or smaller difference in the surface contact area of the fuel cell. The furrows may have rounded corners, as shown in Fig. 2D. And as shown in Fig. 2B, also the furrowing may have alternative shapes to the comb-like structure of Fig. 2A.

The engraving of the unique patterns may be performed by a high energy laser with appropriate scanning speed (50 %), laser intensity (15 % of 23 Watt) and frequency (500 Hz). The patterns were engraved to maximize the surface area of the disc without adversely affecting the mechanical stability of the engraved structures. The typical depth and width of the engraved section was 200 micrometer and 100 micrometer. After the engravement, the single-layer ceramic fuel cell material is ready for use in a fuel cell.

The engravement patterns may wary freely according to design choices. A comb-like structure is here used to merely describe a pattern with many parallel furrows, but other patterns are equally possible, as shown in Fig. 2B. Furrowing is in this context used as a more general term, to describe the result of engraving in any pattern. The engraved furrows may be rectangular or rounded in cross-section, etc.

In practice, we found that the three-phase boundary area (TPB) of the cell increased by 45% on both sides. We found an improvement of 30% in the fuel cell output power density at low temperature operation (550°C) when the fuel and air are supplied on the respective sides of the cell.

The electrochemical performance of the inventive single-layer cells was measured at 550°C. The cells operate in a stable way, based on fuel cell reactions only. The open-circuit voltage (OCV) of these fuel cells do not exceed 1.2 V, so the power density and performance were measured within the traditional voltage limits (0-OCV). Cells with different thicknesses (1, 2, and 3 mm) were used to analyze the pattern of increase in the cell resistance with increase in the cell thickness.

## Claims

1. A material layer for a single layer solid oxide fuel cell, said layer comprising fused nanoparticles being selected to provide reaction sites for hydrogen oxidation and oxygen reduction as well as to provide for ionic transport in said layer, wherein the surface of at least one side of said layer is engraved to increase the surface area of the fuel cell layer.

2. A material layer according to the claim 1, wherein surfaces on both sides of the layer are engraved.

3. A material layer according to claim 1 or 2, wherein said materials comprise ceramic nanoparticle ionic conductors, including 70 - 100 wt % gadolinium doped ceria and 30 - 0 wt % of a material chosen from at least one of the following:
- sodium, lithium and potassium carbonates;
- binary carbonates, i.e. sodium and lithium carbonate;
- lithium and potassium carbonate; or
- sodium and potassium carbonate.

4. A material layer according to claim 1, wherein said materials comprise ceramic nanoparticle materials including 70 - 100 wt % BaZr0.4Ce0.4Y0.1Yb0.103-d and/or BaZr0.35Ce0.5Y0.1503 as proton conductors.

5. A material layer according to any of claims 1 - 4, wherein said materials includes electrode material nanoparticles of at least one of the following:
- CuFe₂O₄;
- La0.6Sr0.4Co0.8Fe0.203-d;
- La0.6Sr0.4CoO3-d;
- NiCoAlLi-oxide; or
- LiNiZn-oxide.
- Ba0.5Sr0.5Co0.8Fe0.2O3-d
- BaCo0.4Fe0.4Zr0.1Y0.1O3-d

6. A material layer according to any of claims 1 - 5, wherein said layer consists of nanoparticle materials which has been mixed together with a solvent and other additives to form a paste with rheological properties enabling fusion and which has been fused into a layer for a fuel cell by direct writing or extrusion- based 3D printing.

7. A material layer according to any of claims 1 - 5, wherein said engraved at least one surface of said layer is engraved to have a furrowed structure with engraved recessions having maximum dimensions of a depth of 200 µm and a width of 100 µm.

8. A solid oxide fuel cell comprising a fused material layer of ceramic nanoparticle materials being selected to provide reaction sites for hydrogen oxidation and oxygen reduction as well as to provide for ionic transport in said layer, wherein the surface of at least one side of said layer is engraved to increase the surface area of the fuel cell layer, and wherein at least said engraved surface has a deposition of a layer of current collector material.

9. A solid oxide fuel cell according to the claim 8, comprising a material layer according to one of the claims 1 -5, wherein said ceramic materials comprise nanoparticle materials, including 70 - 100 wt % gadolinium doped ceria as ionic conductors, and 30 - 0 wt % of a material chosen from at least one of the following:
- sodium, lithium and potassium carbonates;
- binary carbonates, i.e. sodium and lithium carbonate;
- lithium and potassium carbonate; or
- sodium and potassium carbonate.

10. A solid oxide fuel cell according to one of the claims 8 - 9, wherein said ceramic materials comprise nanoparticle materials including 70 - 100 wt % BaZr0.4Ce0.4Y0.1Yb0.103-d and/or BaZr0.35Ce0.5Y0.15O3 as proton conductors.

11. A solid oxide fuel cell according to any of claims 8 - 10, wherein said engraved at least one surface of said layer is engraved to have a furrowed structure with engraved recessions having maximum dimensions of a depth of 200 µm and a width of 100 µm.

12. A method for manufacturing a material layer for a solid oxide fuel cell consisting of ceramic nanoparticle materials according to any of claims 1- 7, wherein the method comprises the steps of:
- providing a mixture of said nanocomposite materials;
- producing said single-layer fuel cell with a method selected from one of the following methods:
• direct writing;
• extrusion- based 3D printing;
• pressing with a pressure of 100-300 MPa;
- engraving a structure to the surface area of the cell at least on one side.

13. A method for manufacturing a material layer according to the claim 12, comprising a step of sintering the cells to remove organic impurities and providing density to the single-layer.

14. A method according to the claim 12 for manufacturing a material layer according to one of the claims 8 - 10, wherein the engraving is performed with a laser having a scanning speed of the laser head = 50 %, an intensity of 3 - 5 Watt and a frequency of 500 Hz.

15. A method according to the claim 12 for manufacturing a material layer according to one of the claims 8 - 10, wherein the engraving is performed to create a furrowed structure with furrows having maximum dimensions of a depth of 200 µm and a width of 100 µm.

16. A method according to the claim 12 for manufacturing a material layer according to any of claims 8 - 10, wherein said engraved structure is deposited with a collector material such as gold to said engraved surface.

## Patentansprüche

1. Materialschicht für eine Einzelschicht-Festoxid-Brennstoffzelle, wobei die Schicht verschmolzene Nanopartikel umfasst, die so ausgewählt sind, dass sie Reaktionsstellen für Wasserstoffoxidation und Sauerstoffreduktion bereitstellen sowie für Ionentransport in der Schicht sorgen, wobei die Oberfläche mindestens einer Seite der Schicht graviert ist, um den Flächeninhalt der Brennstoffzellenschicht zu vergrößern.

2. Materialschicht nach Anspruch 1, wobei die Oberflächen auf beiden Seiten der Schicht graviert sind.

3. Materialschicht nach Anspruch 1 oder 2, wobei die Materialien keramische Nanopartikel-Ionenleiter umfassen, die 70-100 Gew.-% gadoliniumdotiertes Ceroxid und 30-0 Gew.-% eines Materials, ausgewählt aus mindestens einem der Folgenden, beinhalten:
- Natrium-, Lithium- und Kaliumcarbonaten;
- binären Carbonaten, d. h. Natrium- und Lithiumkarbonat;
- Lithium- und Kaliumcarbonat; oder
- Natrium- und Kaliumcarbonat.

4. Materialschicht nach Anspruch 1, wobei die Materialien keramische Nanopartikelmaterialien umfassen, die 70-100 Gew.-% BaZr0,4Ce0,4Y0,1Yb0,1O3-d und/oder BaZr0,35Ce0,5Y0,1503 als Protonenleiter beinhalten.

5. Materialschicht nach einem der Ansprüche 1-4, wobei die Materialien Elektrodenmaterial-Nanopartikel aus mindestens einem der Folgenden beinhalten:
- CuFe₂O₄;
- La0,6Sr0,4Co0,8Fe0,2O3-d;
- La0,6Sr0,4CoO3-d;
- NiCoAlLi-Oxid; oder
- LiNiZn-Oxid,
- Ba0,5Sr0,5Co0,8Fe0,2O3-d,
- BaCo0,4Fe0,4Zr0,1Y0,1O3-d.

6. Materialschicht nach einem der Ansprüche 1-5, wobei die Schicht aus Nanopartikelmaterialien besteht, die mit einem Lösungsmittel und anderen Additiven zusammengemischt wurden, um eine Paste mit rheologischen Eigenschaften zu bilden, die ein Verschmelzen ermöglichen, und die durch direktes Schreiben oder extrusionsbasierten 3D-Druck zu einer Schicht für eine Brennstoffzelle verschmolzen wurden.

7. Materialschicht nach einem der Ansprüche 1-5, wobei die gravierte mindestens eine Oberfläche der Schicht so graviert ist, dass sie eine gefurchte Struktur mit gravierten Vertiefungen aufweist, die maximale Abmessungen einer Tiefe von 200 µm und einer Breite von 100 µm aufweisen.

8. Festoxid-Brennstoffzelle, die eine verschmolzene Materialschicht aus keramischen Nanopartikelmaterialien umfasst, die so ausgewählt sind, dass sie Reaktionsstellen für Wasserstoffoxidation und Sauerstoffreduktion bereitstellen sowie für Ionentransport in der Schicht sorgen, wobei die Oberfläche mindestens einer Seite der Schicht graviert ist, um den Flächeninhalt der Brennstoffzellenschicht zu vergrößern, und wobei mindestens die gravierte Oberfläche eine Abscheidung einer Schicht aus Stromkollektormaterial aufweist.

9. Festoxid-Brennstoffzelle nach Anspruch 8, die eine Materialschicht nach einem der Ansprüche 1-5 umfasst, wobei die keramischen Materialien Nanopartikelmaterialien umfassen, die 70-100 Gew.-% gadoliniumdotiertes Ceroxid als Ionenleiter, und 30-0 Gew.-% eines Materials beinhalten, ausgewählt aus mindestens einem der Folgenden:
- Natrium-, Lithium- und Kaliumcarbonaten;
- binären Carbonaten, d. h. Natrium- und Lithiumkarbonat;
- Lithium- und Kaliumcarbonat; oder
- Natrium- und Kaliumcarbonat.

10. Festoxid-Brennstoffzelle nach einem der Ansprüche 8-9, wobei die keramischen Materialien Nanopartikelmaterialien umfassen, die 70-100 Gew.-% BaZr0,4Ce0,4Y0,1Yb0,1O3-d und/oder BaZr0,35Ce0,5Y0,15O3 als Protonenleiter beinhalten.

11. Festoxid-Brennstoffzelle nach einem der Ansprüche 8-10, wobei die gravierte mindestens eine Oberfläche der Schicht so graviert ist, dass sie eine gefurchte Struktur mit gravierten Vertiefungen aufweist, die maximale Abmessungen einer Tiefe von 200 µm und einer Breite von 100 µm aufweisen.

12. Verfahren zur Herstellung einer Materialschicht für eine Festoxid-Brennstoffzelle, die aus keramischen Nanopartikelmaterialien nach einem der Ansprüche 1-7 besteht, wobei das Verfahren die folgenden Schritte umfasst:
- Bereitstellen eines Gemisches der Nanoverbundstoffmaterialien;
- Erzeugen der Einzelschicht-Brennstoffzelle mit einem Verfahren, ausgewählt aus einem der folgenden Verfahren:
- direktes Schreiben;
- extrusionsbasierter 3D-Druck;
- Pressen mit einem Druck von 100-300 MPa;
- Gravieren einer Struktur in den Flächeninhalt der Zelle mindestens auf einer Seite.

13. Verfahren zur Herstellung einer Materialschicht nach Anspruch 12, das einen Schritt des Sinterns der Zellen umfasst, um organische Verunreinigungen zu entfernen und der Einzelschicht Dichte zu verleihen.

14. Verfahren nach Anspruch 12 zur Herstellung einer Materialschicht nach einem der Ansprüche 8-10, wobei das Gravieren mit einem Laser durchgeführt wird, der eine Abtastgeschwindigkeit des Laserkopfes = 50 %, eine Intensität von 3-5 Watt und eine Frequenz von 500 Hz aufweist.

15. Verfahren nach Anspruch 12 zur Herstellung einer Materialschicht nach einem der Ansprüche 8-10, wobei das Gravieren durchgeführt wird, um eine gefurchte Struktur mit Furchen zu erzeugen, die maximale Abmessungen einer Tiefe von 200 µm und einer Breite von 100 µm aufweisen.

16. Verfahren nach Anspruch 12 zur Herstellung einer Materialschicht nach einem der Ansprüche 8-10, wobei die gravierte Struktur mit einem Kollektormaterial, wie etwa Gold, auf die gravierte Oberfläche abgeschieden wird.

## Revendications

1. Couche de matériau pour une pile à combustible à oxyde solide monocouche, ladite couche comprenant des nanoparticules fusionnées sélectionnées pour fournir des sites de réaction pour une oxydation d'hydrogène et une réduction d'oxygène ainsi que pour fournir un transport ionique dans ladite couche, dans laquelle la surface d'au moins un côté de ladite couche est gravée pour augmenter l'aire de surface de la couche de pile à combustible.

2. Couche de matériau selon la revendication 1, dans laquelle des surfaces des deux côtés de la couche sont gravées.

3. Couche de matériau selon la revendication 1 ou 2, dans laquelle lesdits matériaux incluent des conducteurs ioniques de nanoparticules de céramique, dont 70 à 100 % en poids d'oxyde de cérium dopé au gadolinium et 30 à 0 % en poids d'un matériau choisi parmi au moins un de ce qui suit :
- carbonates de sodium, de lithium et de potassium ;
- carbonates binaires, c'est-à-dire carbonate de sodium et de lithium ;
- carbonate de lithium et de potassium ; ou
- carbonate de sodium et de potassium.

4. Couche de matériau selon la revendication 1, dans laquelle lesdits matériaux comprennent des matériaux de nanoparticules de céramique dont 70 à 100 % en poids de BaZr0,4Ce0,4Y0,1Yb0,103-d et/ou BaZr0,35Ce0,5Y0,1503 comme conducteurs de protons.

5. Couche de matériau selon l'une quelconque des revendications 1-4, dans laquelle lesdits matériaux incluent des nanoparticules de matériau d'électrode d'au moins un de ce qui suit :
- CuFe₂O₄ ;
- La0,6Sr0,4Co0,8Fe0,203-d ;
- La0,6Sr0,4CoO3-d ;
- NiCoA1Li-oxyde ; ou
- LiNiZn-oxyde ;
- Ba0,5Sr0,5Co0,8Fe0,203-d ;
- BaCo0,4Fe0,4Zr0,1Y0,103-d.

6. Couche de matériau selon l'une quelconque des revendications 1-5, dans laquelle ladite couche est constituée de matériaux de nanoparticules qui ont été mélangés avec un solvant et d'autres additifs pour former une pâte avec des propriétés rhéologiques permettant une fusion et qui ont été fusionnés en une couche pour une pile à combustible par écriture directe ou impression 3D par extrusion.

7. Couche de matériau selon l'une quelconque des revendications 1-5, dans laquelle ladite au moins une surface gravée de ladite couche est gravée pour présenter une structure sillonnée avec des évidements gravés présentant des dimensions maximales d'une profondeur de 200 µm et d'une largeur de 100 µm.

8. Pile à combustible à oxyde solide comprenant une couche de matériaux fusionnés de matériaux de nanoparticules de céramique sélectionnés pour fournir des sites de réaction pour une oxydation d'hydrogène et une réduction d'oxygène ainsi que pour fournir un transport ionique dans ladite couche, dans laquelle la surface d'au moins un côté de ladite couche est gravée pour augmenter l'aire de surface de la couche de pile à combustible, et dans laquelle au moins ladite surface gravée présente un dépôt d'une couche de matériau collecteur de courant.

9. Pile à combustible à oxyde solide selon la revendication 8, comprenant une couche de matériau selon l'une des revendications 1-5, dans laquelle lesdits matériaux de céramique comprennent des matériaux de nanoparticules, dont 70 à 100 % en poids d'oxyde de cérium dopé au gadolinium comme conducteurs ioniques, et 30 à 0 % en poids d'un matériau choisi parmi au moins un de ce qui suit :
- carbonates de sodium, de lithium et de potassium ;
- carbonates binaires, c'est-à-dire carbonate de sodium et de lithium ;
- carbonate de lithium et de potassium ; ou
- carbonate de sodium et de potassium.

10. Pile à combustible à oxyde solide selon l'une des revendications 8-9, dans laquelle lesdits matériaux de céramique comprennent des matériaux de nanoparticules, dont 70 à 100 % en poids de BaZr0,4Ce0,4Y0,1Yb0,103-d et/ou BaZr0,35Ce0,5Y0,1503 comme conducteurs de protons.

11. Pile à combustible à oxyde solide selon l'une quelconque des revendications 8-10, dans laquelle ladite au moins une surface gravée de ladite couche est gravée pour présenter une structure sillonnée avec des évidements gravés présentant des dimensions maximales d'une profondeur de 200 µm et d'une largeur de 100 µm.

12. Procédé de fabrication d'une couche de matériau pour pile à combustible à oxyde solide constituée de matériaux de nanoparticules de céramique selon l'une quelconque des revendications 1-7, dans lequel le procédé comprend les étapes consistant à :
- fournir un mélange desdits matériaux nanocomposites ;
- produire ladite pile à combustible monocouche à l'aide d'un procédé choisi parmi l'un des procédés suivants :
• écriture directe ;
• impression 3D par extrusion ;
• pressage à une pression de 100 à 300 MPa ;
- gravure d'une structure sur l'aire de surface de la cellule au moins sur un côté.

13. Procédé de fabrication d'une couche de matériau selon la revendication 12, comprenant une étape de frittage des cellules pour éliminer des impuretés organiques et fournir une densité à la monocouche.

14. Procédé selon la revendication 12 pour la fabrication d'une couche de matériau selon l'une des revendications 8-10, dans lequel la gravure est réalisée avec un laser présentant une vitesse de balayage de la tête laser = 50 %, une intensité de 3 à 5 Watt et une fréquence de 500 Hz.

15. Procédé selon la revendication 12 pour la fabrication d'une couche de matériau selon l'une des revendications 8-10, dans lequel la gravure est réalisée pour créer une structure sillonnée avec des sillons présentant des dimensions maximales d'une profondeur de 200 µm et d'une largeur de 100 µm.

16. Procédé selon la revendication 12 pour la fabrication d'une couche de matériau selon l'une quelconque des revendications 8-10, dans lequel ladite structure gravée est déposée avec un matériau collecteur tel que de l'or sur ladite surface gravée.
